# EUROPEAN PATENT SPECIFICATION

(11) **EP 2 497 897 B1**
(45) Date of publication and mention of the grant of the patent: **19.04.2017**
(21) Application number: 11187221.4
(22) Date of filing: 31.10.2011
(51) Int. Cl.: E21B 19/00, E21B 47/10, E03B 1/00, G01V 9/02, B66D 1/38, E21B 47/04, E21B 47/06, E03B 3/06

(54) **Groundwater profile monitoring system**
System zur Überwachung des Grundwasserprofils
Système pour la surveillance des profils d'eaux souterraines

(30) Priority: 09.03.2011 KR 20110020979
(43) Date of publication of application: 12.09.2012
(73) Proprietor: Korea Institute of Geoscience and Mineral Resources (KIGAM), Daejeon 305-350 (KR)
(72) Inventor: Ha, Kyoochul, Daejeon 305-768 (KR); Won, Young Cheon, Seoul 135-080 (KR)
(74) Representative: Stolmár & Partner Patentanwälte PartG mbB

(56) References cited:
- JP-A- H08 301 580
- JP-A- 2002 087 763
- US-A- 4 374 544
- US-A- 4 807 201
- US-A1- 2009 097 994
- US-B1- 6 910 679

## Description

### BACKGROUND OF THE INVENTION

### 1. Field of the Invention

The present invention relates to a groundwater profile monitoring system, and more particularly to a groundwater profile monitoring system for vertically monitoring information on the quality of groundwater by using a groundwater sensor.

### 2. Description of the Related Art

In general, a groundwater level of an aquifer near the coast periodically rises and falls due to a change of the tide of the ocean, and the salinity of seawater causes a difference in the density of groundwater and the seawater to penetrate under freshwater.

Then, a dispersion zone appears at a border where freshwater and saltwater meet due to a dispersion of water, and a location, a shape, and a range of the mixing zone are determined by a time, a form of an aquifer, an irrigation feature, and an amount of discharged groundwater.

Also, since a coastal aquifer consists of several layers, a quality of groundwater needs to be periodically and vertically monitored so that a non-homogeneity of a medium, an uncertain form and location of a low permeability zone, and a penetration of seawater to groundwater due to their extension properties can be observed.

Korea manages a total of more than 100 seawater penetration observing facilities to secure groundwater of coastal/island areas and prevent penetration of seawater in advance.

Korea manages 131 seawater penetration observing facilities as of 2006, and since an aquifer having several layers is distributed under ground, the qualities of groundwater appear in a variety of ways according to depths. However, since the current monitoring system can observe a quality of water only at a point where it is initially installed, penetration of seawater cannot be properly observed. In particular, since fresh water and saltwater alternate at a place where impermeability layers and permeability layers are distributed to form several layers, causing severe non-homogeneity, it is inevitably necessary to vertically monitor them.

Patent document US 4 807 201 discloses an apparatus measuring changes in groundwater pressure in a borehole. The apparatus comprises: a probe consisting of a hollow tube having a smooth interior surface, an ultrasonic transmitter which emits ultrasonic waves down the interior of the tube, and an ultrasonic receiver which receives and registers the reflected ultrasonic waves; a means to raise and lower the probe so the tube is partially submerged in the groundwater; a means to control the emission of ultrasonic waves; a means to convert the time interval into a distance or pressure measurement; and a means to store or transmit the data.

Patent document US 4 374 544 discloses an injection well control method and apparatus controls fluid injection rates during secondary or tertiary petroleum recovery operations by monitoring bottomhole pressure adjacent an underground formation receiving the injected fluids while simultaneously adjusting the fluid injection rate to substantially reduce unwanted variations in said bottomhole pressure. The injection controller is further adapted for operation on a solar-powered circuit to eliminate the need for electrical power lines in remote geographical locations.

Patent document US 6 910 679 discloses a guide device for a wireline spooler having an axis. A carriage is spaced from the spooler with the carriage including an upstanding fairlead to receive a wireline. A first mechanism reciprocates the carriage laterally parallel to the spooler axis. A second mechanism raises and lowers the carriage in a direction vertical to the first mechanism. The first and second mechanisms operate independently of each other and operate independently of a drive mechanism for winding the wireline.

### SUMMARY OF THE INVENTION

Accordingly, the present invention has been made to solve the above-mentioned problems occurring in the prior art. This is achieved by the teaching of independent claim 1.
An aspect provides a groundwater profile monitoring system which can collect a profile material regarding a quality of groundwater at a predetermined time interval and effectively observe a quality of groundwater at a location of an uneven aquifer where it is necessary to observe a penetration of seawater and a vertical quality of groundwater.

In accordance with an aspect, there is provided a groundwater profile monitoring system including: a groundwater sensor configured to sense a state of groundwater; a driving unit including a sensor cable to which the groundwater sensor is connected at one end thereof and configured to vertically move the groundwater sensor; a data logger configured to receive and store sensing information sensed by the groundwater sensor and transmit the sensing information to a designated server; and a power supply unit configured to produce electric power using solar energy and supply the produced electric power to the driving unit and the data logger.

The driving unit includes a winding part for winding the sensor cable, a winding motor configured to rotate the winding part, and a controller configured to control the winding motor. The controller drives the winding motor at a predetermined time interval and moves the groundwater sensor upward and downward.

The driving unit includes : a cable guide configured to guide the sensor cable so that the sensor cable is uniformly wound on the winding part; a guide rail connected to the cable guide and configured to guide a movement path of the cable guide; a pair of feeding cables connected to opposite sides of the cable guides; and a pair of guide motors selectively driven by the controller and configured to pull the feeding cables respectively and move the cable guide to the right and to the left.

A pair of movement restrictors disposed opposite to each other may be coupled to the guide rail such that a movement range of the cable guide is restricted by the movement restrictors.

Each movement restrictor may include an approach detector configured to transmit a sensing signal when the cable guide approaches within a predetermined distance. The controller may receive the sensing signal to stop one of the guide motors which is being driven and drive the remaining guide motor, so as to allow the cable guide to move in a direction opposite to a travel direction of the cable guide.

The movement restrictor may include a changeover switch contacting the cable guide to be operated. The controller may receive a contact signal of the changeover switch to stop one of the guide motors which is being driven and drive the remaining guide motor, so as to allow the cable guide to move in a direction opposite to a travel direction of the cable guide.

The cable guide may include a depth measurer configured to measure a winding length of the sensor cable and calculate a depth of the groundwater sensor.

According to the present invention, since a profile material of vertical groundwater according to a depth of a tube well can be continuously collected by using one sensor, an accurate groundwater related material can be collected more efficiently. Further, since a separate power transmission system for managing a system is not required, the system can be easily constructed in an area where electric power cannot be supplied easily.

### BRIEF DESCRIPTION OF THE DRAWINGS

The above and other aspects, features and advantages of the present invention will be more apparent from the following detailed description taken in conjunction with the accompanying drawings, in which:
FIG. 1 is a front view of a groundwater profile monitoring system according to an exemplary embodiment of the present invention;
FIG. 2 is a view illustrating a driving unit of the groundwater profile monitoring system according to the exemplary embodiment of the present invention;
FIG. 3 is a view illustrating a part of the driving unit of FIG. 2;
FIG. 4 is a side view illustrating the driving unit of FIG. 2;
FIG. 5 is a view for explaining a structure of a cable guide.

### DETAILED DESCRIPTION OF EMBODIMENTS OF THE PRESENT INVENTION

Hereinafter, embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear. While the exemplary embodiment of the present invention will be described hereinbelow, it is apparent that the technical spirit of the present invention is not limited to the embodiment but may be properly carried out by those skilled in the art.

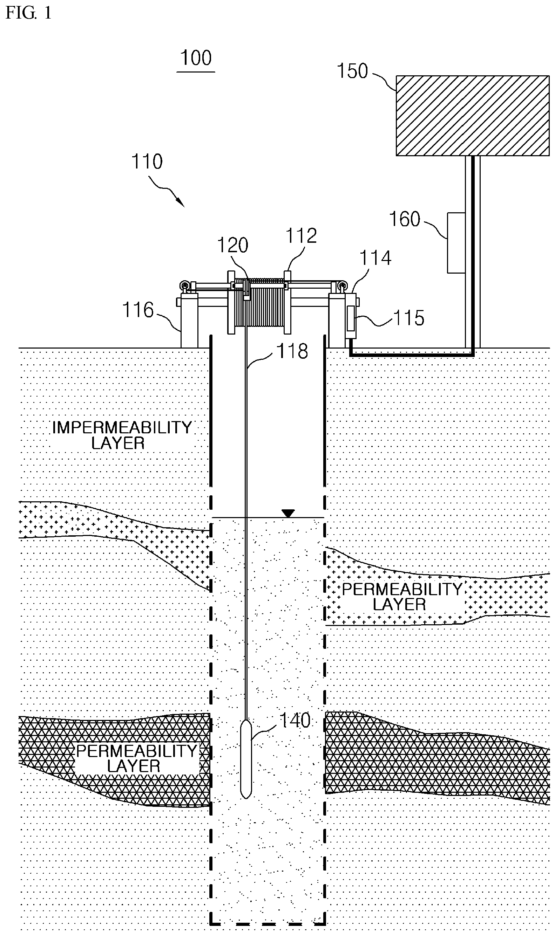

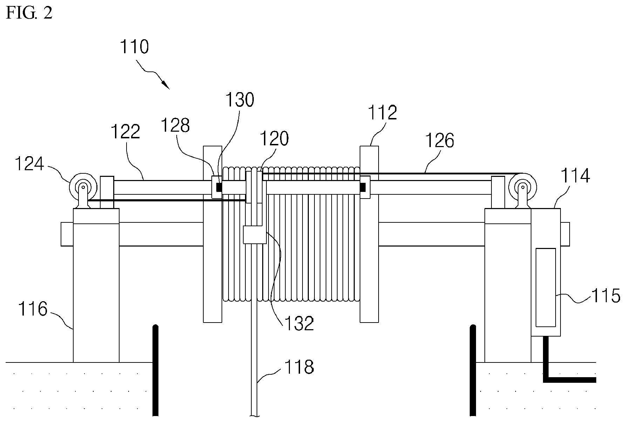

FIG. 1 is a front view of a groundwater profile monitoring system according to an exemplary embodiment of the present invention. FIG. 2 is a view illustrating a driving unit of the groundwater profile monitoring system according to the exemplary embodiment of the present invention.

Hereinafter, the groundwater profile monitoring system 100 according to the exemplary embodiment of the present invention will be described with reference to FIGS. 1 and 2.

The groundwater profile monitoring system 100 according to the exemplary embodiment of the present invention includes a driving unit 110, a groundwater sensor 140, a power supply unit 150, and a data logger 160.

The driving unit 110 includes a sensor cable 118 to move the groundwater sensor 140 connected to one end of the sensor cable 118 vertically, i.e. in an upward/downward direction of FIG. 1.

In more detail, the driving unit 110 includes a winding part 112 configured to be rotated about a shaft inserted into a center thereof to wind a cable 118 therearound and a winding motor 114 configured to rotate the winding part 112. The winding part 112 and the winding motor 114 are supported by a support frame 116.

The driving unit 110 includes a controller 115 configured to control a driving interval and a rotating direction of the winding motor 114. The controller 115 drives the winding motor 114 at a predetermined time interval to move the groundwater sensor 140 upward and downward.

The groundwater sensor 140 senses a state of groundwater. In more detail, the groundwater sensor 140 collects information about a water level, a temperature, an electric conductivity, a TDS (Total Dissolved Solids), a DO (Dissolved Oxygen), etc. and transmits the information to the data logger 160.

Then, the groundwater sensor 140 may be set to sense states of the groundwater at a predetermined time interval, and preferably includes a wireless communication means for transmitting collected information to the data logger 160.

The groundwater sensor 140 may include its own depth sensor for measuring a depth of its location. In this case, a depth of the groundwater sensor 140 may be identified without using a below-described depth measurer 130.

The power supply unit 150 may be realized by a photovoltaic power generation means or a solar thermal power generation means for producing electric power using solar energy. Preferably, the power supply unit 150 is realized by a photovoltaic power or solar thermal power generation means including a capacitor.

The power supply unit 150 supplies the produced electric power to parts, such as the driving unit 110 and the data logger 160, which require electric power.

When the power supply unit 150 is realized by an electric power generation unit which uses solar energy, the groundwater profile monitoring system 100 according to the exemplary embodiment of the present invention may be easily installed even in an area having no electric facility and to which electric power cannot be supplied easily.

The groundwater profile monitoring system 100 according to the exemplary embodiment of the present invention drives the driving unit 110 and the data logger 160 at a predetermined time interval, significantly reducing power consumption.

Accordingly, even when the power supply unit 150 is realized by a photovoltaic power or solar thermal power generation means showing a difference between amounts of generated electric power depending on a change in weather, electric power may be stably supplied to the parts to which electric power should be supplied by using the already generated and accumulated electric power.

The data logger 160 receives sensing information sensed and collected by the groundwater sensor 140, and transmits the sensing information to a server (not shown).

The data logger 160 is configured to transmit and receive data to and from the groundwater sensor 140 and the server (not shown) through a wireless communication means. For example, the data logger 160 may include a CDMA (Code Division Multiple Access) modem to transmit and receive data using the CDMA modem.

The data logger 160 is configured to transmit an emergency signal to a manager or a user through the CDMA modem when electric power of a predetermined level cannot be supplied or data cannot be smoothly transmitted or received due to a failure of a device which can be caused by lightning.

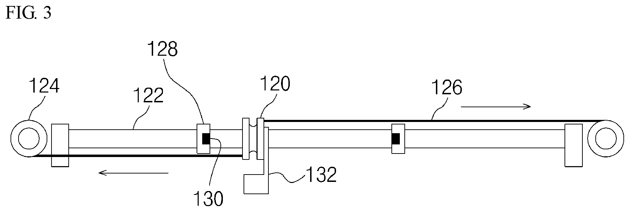

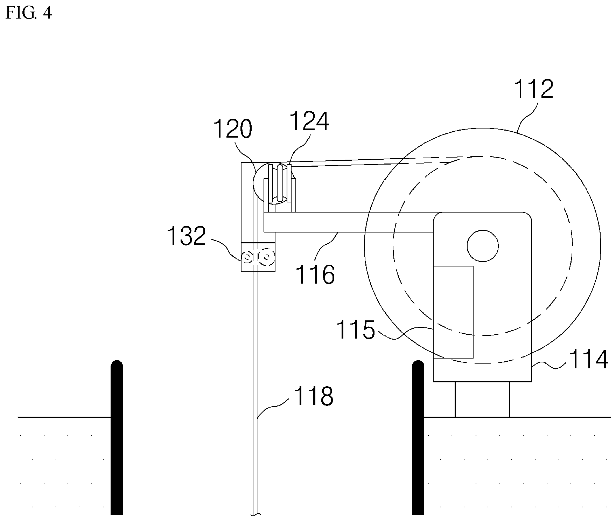

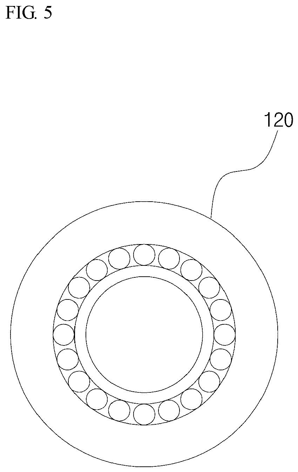

FIG. 3 is a view illustrating a part of the driving unit of FIG. 2. FIG. 4 is a side view illustrating the driving unit of FIG. 2. FIG. 5 is a view for explaining a structure of a cable guide.

The driving unit guides the sensor cable 118 so that the sensor cable 118 can be uniformly wound on the winding part 112 and prevents the sensor cable 118 from being intensively wound only on one side of the winding part 112. To achieve this, the driving part 110 further includes a cable guide 120 and a unit for driving the cable guide 120.

Hereinafter, the cable guide 120 and the unit for driving the cable guide 120 will be described in detail with reference to FIGS. 3 to 5.

The cable guide 120 includes a groove for preventing the sensor cable 118 from being separated from the cable guide 120 while moving to the right and to the left to guide a location where the sensor cable 118 is wound.

As illustrated in FIG. 5, the cable guide 120 may have a form where a bearing is interposed between an inner race and an outer race, but also may have a form where an inner race is rotated by the sensor cable 118 and a feeding cable 126 is connected to an outer race.

The cable guide 120 is moved to the right and to the left along an axial direction of the guide rail 122 while being connected to the guide rail 122. Then, the guide rail 122 is coupled to and supported by the support frame 116 and disposed parallel to an axial direction of the winding part 112.

Feeding cables 126 are respectively connected to opposite side surfaces of the cable guide 120, i.e. a left side surface and a right side surface of the cable guide 120 of FIG. 3.

The feeding cables 126 are respectively pulled by a pair of guide motors 124 installed on the right and left sides of the groundwater profile monitoring system 100 respectively, so that the cable guide 120 can be moved to the right and to the left.

Then, a pair of movement restrictors 128 disposed opposite to each other may be coupled to the guide rail 122.

The movement restrictors 128 prevent the cable guide 120 moved to the right and to the left along a guide rail 122 from being deviated from a winding range of the winding part 112. That is, the movement range of the cable guide 120 is restricted by the movement restrictors 128.

The movement restrictors 128 are disposed at locations corresponding to the right and left sides in the winding part 112 which are spaces for winding the sensor cable 118.

Meanwhile, a pair of guide motors 124 for moving the cable guide 120 is selectively driven under the control of the controller 115.

To achieve this, the movement restrictor 128 includes an approach detector 130 configured to transmit a sensing signal to the controller 115 when the cable guide 120 approaches within a predetermined distance.

When receiving the sensing signal, the controller 115 stops a guide motor 124 which is being driven and drives a guide motor 124 on an opposite side to allow the cable guide 120 to move in a direction opposite to its travel direction.

For example, the right guide motor 124 remains stopped while the left guide motor 124 installed on the left side of FIG. 2 is driven to pull the cable guide to the left. In this state, if the cable guide 120 continues to move to the left so that the approach detector 130 detects an approach of the cable guide 120, the sensing signal is transmitted to the controller 115 and the controller 115 stops the left guide motor 124 which is being driven and drives the right guide motor 124. If the right guide motor 124 is driven, the cable guide 120 is pulled and moved to the right.

In this way, the cable guide 120 is reciprocally moved to the right and to the left to allow the sensor cable 118 to be uniformly wound on the winding part 112.

The movement restrictor 128 may include a changeover switch (not shown) contacting the cable guide 120 to be operated instead of the approach detector 130, so that the guide motors 124 can be selectively driven by the controller 115 having received a contact signal of the changeover switch.

Meanwhile, the cable guide 120 further includes a depth measurer 132 configured to measure a winding length of the sensor cable 118 and calculate a depth of the groundwater sensor 140 inserted into a tube well.

The depth measurer 132 may be realized by equipment such as a unit having a reel contacting the sensor cable 118 to be rotated or an encoder.

The depth information of the groundwater sensor 140 measured by the depth measurer 132 is transmitted to the data logger 160 through a wireless communication means installed in the depth measurer 132.

## Claims

1. A groundwater profile monitoring system (100), the system comprising:
a groundwater sensor (140) configured to sense a state of groundwater;
a driving unit (110) including a sensor cable (118) to which the groundwater sensor (140) is connected at one end thereof and configured to vertically move the groundwater sensor (140);
a data logger (160) configured to receive and store sensing information sensed by the groundwater sensor (140) and transmit the sensing information to a designated server; and
a power supply unit (150) configured to produce electric power using solar energy and supply the produced electric power to the driving unit (110) and the data logger (160),
wherein the driving unit (110) includes:
a winding part (112) for winding the sensor cable (118),
a winding motor (114) configured to rotate the winding part (112), and
a controller (115) configured to control the winding motor (114),
wherein the controller (115) drives the winding motor (114) at a predetermined time interval and moves the groundwater sensor (140) upward and downward,
**characterized in that**
the driving unit further includes:
a cable guide (120) configured to guide the sensor cable (118) so that the sensor cable (118) is uniformly wound on the winding part (112);
a guide rail (122) connected to the cable guide (120) and configured to guide a movement path of the cable guide (120);
a pair of feeding cables (126) connected to opposite sides of the cable guides (120); and
a pair of guide motors (124) selectively driven by the controller (115) and configured to pull the feeding cables (126) respectively and move the cable guide (120) to the right and to the left.

2. The groundwater profile monitoring system as claimed in claim 1, wherein a pair of movement restrictors (128) disposed opposite to each other are coupled to the guide rail (122) such that a movement range of the cable guide (120) is restricted by the movement restrictors (128).

3. The groundwater profile monitoring system as claimed in claim 2, wherein each movement restrictor (128) includes an approach detector (130) configured to transmit a sensing signal when the cable guide (120) approaches within a predetermined distance, and wherein the controller (115) receives the sensing signal to stop one of the guide motors (124) which is being driven and drive the remaining guide motor, so as to allow the cable guide (120) to move in a direction opposite to a travel direction of the cable guide (120).

4. The groundwater profile monitoring system as claimed in claim 2, wherein the movement restrictor (128) includes a changeover switch contacting the cable guide (120) to be operated, and wherein the controller (115) receives a contact signal of the changeover switch to stop one of the guide motors (124) which is being driven and drive the remaining guide motor, so as to allow the cable guide (120) to move in a direction opposite to a travel direction of the cable guide (120).

5. The groundwater profile monitoring system as claimed in claim 1, wherein the cable guide (120) includes a depth measurer (132) configured to measure a winding length of the sensor cable (118) and calculate a depth of the groundwater sensor (140).

## Patentansprüche

1. System zur Überwachung des Grundwasserprofils (100) umfassend:
einen Grundwassersensor (140), der eingerichtet ist, um einen Zustand des Grundwassers zu erkennen;
eine Antriebseinheit (110), die ein Sensorkabel (118) mit einschließt, an dessen einem Ende der Grundwassersensor (140) angeschlossen ist und das eingerichtet ist, um den Grundwassersensor (140) vertikal zu bewegen;
einen Datenlogger (160), der eingerichtet ist, um die von dem Grundwassersensor (140) erkannten Informationen zu empfangen und zu speichern und die Informationen an einen vorgesehenen Server zu übertragen; und
eine Energieversorgungseinheit (150), die eingerichtet ist, um elektrischen Strom unter Verwendung von Solarenergie zu erzeugen und die Antriebseinheit (110) und den Datenlogger (160) mit dem erzeugten elektrischen Strom zu versorgen,
wobei die Antriebseinheit (110) mit einschließt:
ein Wicklungselement (112) zum Aufwickeln des Sensorkabels (118),
einen Wicklungsmotor (114), der eingerichtet ist, um das Wicklungselement (112) zu rotieren, und
eine Steuereinheit (115), die eingerichtet ist, um den Wicklungsmotor (114) zu steuern,
wobei die Steuereinheit (115) den Wicklungsmotor (114) in einem vorbestimmten Zeitintervall antreibt und den Grundwassersensor (140) aufwärts und abwärts bewegt,
**dadurch gekennzeichnet, dass**
die Antriebseinheit des Weiteren mit einschließt:
eine Kabelführung (120), die eingerichtet ist, um das Sensorkabel (118) zu führen, so dass das Sensorkabel (118) gleichmäßig auf das Wicklungselement (112) aufgewickelt wird;
eine Führungsschiene (122), die mit der Kabelführung (120) verbunden ist und die eingerichtet ist, um einen Bewegungsbahn der Kabelführung (120) zu leiten;
ein Paar Zuführkabel (126), die an gegenüberliegenden Seiten der Kabelführungen (120) angeschlossen sind; und
ein Paar Führungsmotoren (124), die selektiv durch die Steuereinheit (115) angetrieben werden und die eingerichtet sind, um die Zuführkabel (126) jeweils zu ziehen und die Kabelführung (120) nach rechts und nach links zu bewegen.

2. System zur Überwachung des Grundwasserprofils nach Anspruch 1, wobei ein Paar Bewegungsbegrenzer (128), die einander gegenüberliegend angeordnet sind, an der Führungsschiene (122) derart befestigt sind, dass eine Bewegungsreichweite der Kabelführung (120) durch die Bewegungsbegrenzer (128) eingeschränkt ist.

3. System zur Überwachung des Grundwasserprofils nach Anspruch 2, wobei jeder der Bewegungsbegrenzer (128) einen Näherungsdetektor (130) mit einschließt, der eingerichtet ist, um ein Erkennungssignal zu übertragen wenn die Kabelführung (120) sich innerhalb einer vorbestimmten Distanz nähert, und wobei die Steuereinheit (115) das Erkennungssignal empfängt um den einen sich in Betrieb befindenden Führungsmotor (124) anzuhalten und den anderen Führungsmotor anzutreiben, damit es der Kabelführung (120) ermöglicht ist, sich in eine Richtung entgegengesetzt zu einer Fahrtrichtung der Kabelführung (120) zu bewegen.

4. System zur Überwachung des Grundwasserprofils nach Anspruch 2, wobei der Bewegungsbegrenzer (128) einen Wechselschalter mit einschließt, der die zu betreibende Kabelführung (120) kontaktiert, und wobei die Steuereinheit (115) ein Kontaktsignal des Wechselschalters empfängt um den einen sich in Betrieb befindenden Führungsmotor (124) anzuhalten und den anderen Führungsmotor anzutreiben, damit es der Kabelführung (120) ermöglicht ist, sich in eine Richtung entgegengesetzt zu einer Fahrtrichtung der Kabelführung (120) zu bewegen.

5. System zur Überwachung des Grundwasserprofils nach Anspruch 1, wobei die Kabelführung (120) einen Tiefenmesser (132) mit einschließt, der eingerichtet ist, um die Wickellänge des Sensorkabels (118) zu messen und eine Tiefe des Grundwassersensors (140) zu berechnen.

## Revendications

1. Un système de surveillance d'eau souterraine (100), le système comprenant:
un capteur d'eau souterraine (140) configuré pour détecter un état de l'eau souterraine;
une unité d'entraînement (110) comprenant un câble de capteur (118) auquel le capteur d'eau souterraine (140) est connecté à une extrémité de celui-ci et configuré pour déplacer verticalement le capteur d'eau souterraine (140);
un enregistreur de données (160) configuré pour recevoir et enregistrer des informations de détection détectées par le capteur d'eau souterraine (140) et transmettre les informations de détection à un serveur désigné; et
une unité d'alimentation électrique (150) configuré pour produire de l'énergie électrique en utilisant l'énergie solaire et fournir la puissance électrique produite à l'unité d'entraînement (110) et a l'enregistreur de données (160),
dans lequel l'unité d'entraînement (110) comprend:
une partie d'enroulement (112) pour enrouler le câble de capteur (118),
un moteur d'enroulement (114) configuré pour faire tourner le partie d'enroulement (112), et
un contrôleur (115) configuré pour contrôler le moteur d'enroulement (114),
dans lequel le contrôleur (115) entraîne le moteur d'enroulement (114) à un intervalle de temps prédéterminé et déplace le capteur d'eau souterraine (140) vers le haut et vers le bas,
**caractérisé en ce que**
l'unité d'entraînement comprend en outre:
un guide-câble (120) configuré pour guider le câble de capteur (118) de telle manière que le câble de capteur (118) soit enroulé uniformément sur la partie d'enroulement (112);
un rail de guidage (122) connecté au guide-câble (120) et configuré pour guider un trajet de déplacement du guide-câble (120);
une paire de câbles d'alimentation (126) connectés aux côtés opposés du guide-câbles (120); et
une paire de moteurs de guidage (124) actionnés sélectivement par le contrôleur (115) et configurés pour tirer les câbles d'alimentation (126) respectivement et pour déplacer le guide-câble (120) vers la droite et vers la gauche.

2. Le système de surveillance d'eau souterraine selon la revendication 1, dans lequel une paire de restricteurs de mouvement (128) disposés à l'opposé l'un de l'autre sont accouplés au rail de guidage (122) de telle manière que une plage de déplacement du guide-câble (120) soit limitée par les restricteurs de mouvement (128).

3. Le système de surveillance d'eau souterraine selon la revendication 2, dans lequel chaque restricteur de mouvement (128) comprend un détecteur d'approche (130) configuré pour transmettre un signal de détection quand le guide-câble (120) approche à une distance prédéterminée, et dans lequel le contrôleur (115) reçoit le signal de détection pour arrêter l'un des moteurs de guidage (124) qui est entraîné et entraîner le moteur de guidage restant, de telle manière à permettre au guide-câble (120) de se déplacer dans une direction opposée à une direction de déplacement du guide-câble (120).

4. Le système de surveillance d'eau souterraine selon la revendication 2, dans lequel le restricteur de mouvement (128) comprend un commutateur en contact avec le guide-câble (120) pour être actionné, et dans lequel le contrôleur (115) reçoit un signal de contact du commutateur pour arrêter un des moteurs de guidage (124) qui est entraîné et entraîner le moteur de guidage restant, de telle manière à permettre au guide-câble (120) de se déplacer dans une direction opposée à une direction de déplacement du guide-câble (120).

5. Le système de surveillance d'eau souterraine selon la revendication 1, dans lequel le guide-câble (120) comprend un dispositif de mesure (132) configuré pour mesurer une longueur d'enroulement du câble de capteur (118) et calculer une profondeur du capteur d'eau souterraine (140).
